# EUROPEAN PATENT SPECIFICATION

(11) **EP 3 076 396 B1**
(45) Date of publication and mention of the grant of the patent: **11.07.2018**
(21) Application number: 16000767.0
(22) Date of filing: 01.04.2016
(51) Int. Cl.: G21B 3/00

(54) **METHOD FOR PRODUCING HEAVY ELECTRONS**
VERFAHREN ZUR HERSTELLUNG VON SCHWEREN ELEKTRONEN
PROCÉDÉ POUR LA PRODUCTION D'ÉLECTRONS LOURDS

(30) Priority: 02.04.2015 IT UB20150068
(43) Date of publication of application: 05.10.2016
(73) Proprietor: Schiavon, Mauro, 35129 Padova (PD) (IT); Giacon, Stefano, 35133 Padova (PD) (IT)
(72) Inventor: Schiavon, Mauro, 35129 Padova (PD) (IT); Giacon, Stefano, 35133 Padova (PD) (IT)

(56) References cited:
- WO-A2-2006/119080
- WO-A2-2007/030740
- US-A1- 2008 135 398
- US-A1- 2011 233 061
- US-A1- 2011 255 645
- US-A1- 2014 170 664
- L. Larsen: "Low Energy Neutron Reactions (LENRs)", Lattice Energy LLC , 23 August 2012 (2012-08-23), pages 1-92, XP002751056, Retrieved from the Internet: URL:http://www.slideshare.net/lewisglarsen /lattice-energy-llc-hightemperature-superc onductivity-in-patchesaug-23-2012 [retrieved on 2015-11-18]
- David B. Geohegan, et al.: "Single-Walled Carbon Nanohorns for Hydrogen Storage and Catalyst Supports", Oak Ridge National laboratory , June 2007 (2007-06), pages 1-23, XP002751057, Retrieved from the Internet: URL:http://web.ornl.gov/sci/hfcitprogram/S torage/H2FSGeohegan.pdf [retrieved on 2015-11-18]

## Description

The present invention relates to a method for producing heavy electrons and the relative utilization of said production of heavy electrons in order to trigger and sustain a low energy nuclear reaction.

### Background of the invention

Recently a theory was advanced that combines the energy developed by the "Low Energy Nuclear Reactions" (LENR - Low Energy Nuclear Reactions) with the production of heavy electrons. Briefly, this theory proposed by Widom and Larsen, states that at the base of the development of low-energy nuclear reactions there are appropriate energy resonance conditions of "surface plasmon polaritons" (Surface Plasmon Polariton - SPP) capable of producing heavy electrons that interact with hydrogen ions in a crystal of a metal hydride or of an electrically conductive material that has hydrogen ions on the surface.

The theory describes how the heavy electrons that are produced are subjected later to electronic capture by hydrogen ions.

This interaction activity between heavy electrons and hydrogen ions produces neutrons that are captured by atoms of so-called "target" materials that are nearby, transmuting them into new isotopes that subsequently, through nuclear reactions with a low decay energy, release net positive energy in the process. See L. Larsen et al. "Ultra Low Momentum Neutron Catalyzed Nuclear Reactions on Metallic Hydride Surface", European Physical Journal C-Particles and Fields, 46 p. 107-112, 2006, and US Patent No.7,893,414 issued at the same time as Larsen and others.

Thereafter, the patent application US 2011/0255645 A1, proposed by Zawodny, incorporates by reference U.S. Patent No. N.7,893,414 issued to Larsen et al., and proposes to overcome its drawbacks and disadvantages. Patent application US 2011/0255645 A1 is, however, lacking in more substantial specific and practical aspects.

In particular, patent application US 2011/0255645 A1 provides for the use of electrically conductive materials "(for example, metals, carbon nanotubes, graphene, superconducting materials, etc.)".

Said patent application indicates that these electrically conductive materials can also occur in the form of particles or fibers.

The very same patent application also takes into consideration that the nanotubes are nanoparticles.

The nanotubes, however, are not effective in producing large amounts of heavy electrons with extra mass values so that they can be captured by hydrogen ions to form neutrons.

Therefore, the state of art shows the limits both in the production of heavy electrons with extra mass values such that they can be captured by hydrogen ions to form neutrons but, above all, because it does not show a device that uses such production and that can trigger and sustain a low energy nuclear reaction.

### Objects

Accordingly, it is an object of the present invention to provide a method for the production of heavy electrons for the utilization of said production of heavy electrons to trigger and sustain a low energy nuclear reaction.

The present invention achieves these purposes, and is a substantial improvement in the general state of the art.

### Description of the invention

First of all the method is presented, according to this invention, for producing heavy electrons for the utilization of said production of heavy electrons in order to trigger and sustain a low energy nuclear reaction.

Said method is generally based on the physical phenomenon of Surface Plasmon Resonance (Surface Plasmon Resonance - SPR) which is briefly summarized below. This physical phenomenon causes the resonant collective oscillation of the conduction electrons on the interface surface between a conductive material, with a real part of the negative dielectric constant, and a dielectric material with a positive electric permittivity, if stimulated by incident electromagnetic radiation at a suitable resonance frequency.

The resonance condition is established when the frequency of the incident electromagnetic radiation is tuned with the natural oscillation frequency of the surface electrons, which oscillate against the retraction force of the fixed positive nuclei.

More particularly, the method that is presented is based on the phenomenon of Localized Surface Plasmon Resonance (LSPR), which is a variant of the physical phenomenon called SPR; in fact, when the surface plasmons are localized in a nanostructure, in turn surrounded by a dielectric medium and said nanostructure is smaller than the wavelength of the incident electromagnetic radiation, the plasmons oscillate coherently around the nanostructure to a specific resonance frequency if stimulated by an incident electromagnetic radiation in tune with the natural oscillation frequency of the electrons near the surface of the nanostructure.

The physical phenomenon LSPR, described so far, was already part of the description of patent application US 2011/0255645 A1; said patent application, however, was generic and described inadequately.

In the present invention a particular type of nanoparticle is used, which because of its size, its particular geometric shape, conformation and physical characteristics is by far the most appropriate and effective compared to those mentioned, for producing said heavy electrons in such quantities as to trigger and sustain a low energy nuclear reaction.

In fact with said particular type of nanoparticles it has been noted that, using a suitable method set out in the present invention, it is possible to produce heavy electrons with such extra mass values that they can be captured by hydrogen ions and give rise to a flux of neutrons that trigger and sustain a low energy nuclear reaction.

In accordance with the present invention, a method is provided for the production of heavy electrons for the utilization of said production of heavy electrons to trigger and sustain a low energy nuclear reaction.

This method for the production of heavy electrons uses the following elements that have particular properties and characteristics.
1 - electrically conductive nanoparticles belonging to a particular type of nanoparticles, the nanohorns.
   They are used, in particular, in the present invention for the production of heavy electron carbon nanohorns with a size between 30 and 120nm.Said carbon nanohorns have an almost spherical symmetrical form, have a corrugated surface with the presence of a large number of protrusions, prominences/indentations with small curvature radii.
   Said carbon nanohorns, in fact, have, on the surface, conically shaped nanostructures of the single wall graphene variety that possess high electron mobility capable of considerably amplifying the incident electric field at the resonant frequency.
   Again, said carbon nanohorns feature very high outer surface values per unit weight, with typical production values around 150 - 450 m²/gram;
2 - A dielectric liquid transparent to electromagnetic radiation and which has hydrogen and/or hydroxonium ions dispersed inside it; preferably water with no elements that would alter the characteristics of transparency to electromagnetic radiation. If necessary, the water can be demineralized water or deionized water or distilled water or heavy water or a mixture of said types of water.
3 - A nanofluid achieved by the uniform dispersion of said carbon nanohorns in said dielectric liquid transparent to electromagnetic radiation.
   Said nanofluid can be achieved, dispersing the carbon nanohorns in said dielectric liquid transparent to electromagnetic radiation by means of sonication or by other mechanical dispersion methods.
   Preferably said nanofluid has a concentration of carbon nanohorns in said dielectric liquid between 20 milligrams and 20 grams per liter.
4 - A source of electromagnetic radiation which irradiates said nanofluid with a beam of pulsed electromagnetic radiation, coherent, monochromatic, to the surface plasmon natural resonance frequency of said nanofluid. Said beam of impulsive electromagnetic radiation has pulses with a duration of between 100 nanoseconds and 10 picoseconds, and with a pulse repetition frequency of between 1 Hz and 10000Hz.

Said beam of electromagnetic radiation has an irradiance between 10¹⁰ and 10¹³ W/cm².

In accordance with the invention, the natural frequency of plasmon resonance of said nanofluid, composed of said dielectric liquid and said carbon nanohorns, is detected with a spectrophotometer. With this instrument you run the transmittance spectrum of said nanofluid for different concentrations of carbon nanohorns in the electromagnetic spectrum of the near ultraviolet, the visible and the near-infrared (wavelengths between 200nm and 1.2µm). From the analysis of said transmittance spectrum it appears that, for different concentrations of said nanofluid, the minimum transmittance of the incident electromagnetic radiation, in the spectrum of wavelengths taken into consideration, occurs in correspondence to the wave length of about 260nm. Therefore, at the wavelength of about 260 nm there is maximum absorption of incident electromagnetic energy on the nanoparticles uniformly dispersed in said nanofluid.

From the transmittance spectrum of is also apparent that varying the concentration of said nanofluid does not appreciably change the natural frequency of the surface plasmon resonance of said nanofluid.

The natural frequency of the surface plasmon resonance of said nanofluid is therefore in the band of near ultraviolet region of the electromagnetic spectrum in particular, at the natural frequency of plasmon resonance of said nanofluid, approximately 1.15x10¹⁵ Hz, there is a high surface amplification of the incident excitation electromagnetic field on the nanoparticles.

The Widom Larsen theory, cited in the prior art, for the production of low-energy nuclear reactions provides an essential first step which consists precisely of the production of heavy electrons.

To produce heavy electrons is necessary to provide extra energy/mass to the electrons that at rest have an energy/mass of about 0.51MeV.

This extra energy/mass is made available as a result of the strong electric fields that are established in the vicinity of the surface of separation between the nanostructures and the dielectric fluid in which they are uniformly dispersed to form a nanofluid.

Although the voltage associated with these induced electric fields on the surface of the nanoparticles is modest, in the order of magnitude of at most a few dozen volts, the relative electric fields in play manifest themselves in a such a small scale of physical dimensions that said electrical fields can be extremely intense.

Following these strong surface electric fields, once an electron absorbs energy from said electrical fields an energy/mass to overcome by at least a factor 2.53 its energy/mass at rest, it becomes a heavy electron with a mass that can be captured quickly by a hydrogen ion present in close proximity to said heavy electrons.

For this to occur, a source of electromagnetic radiation must irradiate the nanoparticle to a frequency value, in tune with the natural frequency of surface plasmon resonance, for a short time and with suitable energy in order to realize, after the surface amplification, an RMS value electric field around the nano particle of at least 10¹¹ V/m.

In fact, when the electric field, with a frequency in the ultraviolet spectrum, around the nanoparticle reaches and remains, even if for a very short time, at RMS values higher than 10¹¹ V/m, the additional energy/mass is made available to the electrons that become heavy electrons such that they can be captured quickly by hydrogen ions in the dielectric liquid near the surface of the nanoparticles.

To realize the production of heavy electrons with high extra mass values, according to the present invention, a source of electromagnetic radiation is used that irradiates the nanofluid, previously described, with an impulsive electromagnetic radiation beam, coherent, monochromatic at the natural frequency of surface plasmon resonance of said nanofluid.

Said radiation beam is pulsed and the pulses have a duration of between 100 nanoseconds and 10 picoseconds, with a pulse repetition frequency of between 1Hz and 10000H.

Said radiation beam has an irradiance between 10¹⁰ and 10¹³ W/cm2.

Advantageously, for the purposes of the surface plasmon resonance of said nanofluid, said electromagnetic radiation beam coherent, monochromatic, and collimated should have a frequency in the neighborhood of 1.15x10¹⁵ Hz. Considering, as described previously, that the amplification of the electric field induced on the surface of the nanoparticles over the effective value of 10¹¹ V/m is essential for the production of heavy electrons so they can be captured by hydrogen ions, it is important to consider what the parameters are that according to the physical phenomenon LSPR, on which the present invention is based, contribute to the surface amplification of the electric field; these parameters are considered below.
1 - Nanoparticles with sizes smaller than the wavelength of the incident electromagnetic radiation, therefore nanoparticles with dimensions in a well determined range of values; in fact the incident electromagnetic radiation considered is in the frequency band that affects the near infra-red and the near ultraviolet and the visible, consequently the dimensions of the nanoparticles are usually between a few nanometers and slightly more than 100 nanometers.
2 - Nanoparticles with a surface shape that is always able to receive the maximum amount of incident electromagnetic excitation radiation regardless of the orientation.
3 - Nanoparticles that have corrugated surfaces with the presence of protrusions, prominences/indentations with small curvature radii, such as to constitute "hot spots" for amplification of the surface electromagnetic field.
4 - Nanoparticles having on the surface single wall graphene nanostructures that have therefore a high surface electron mobility.
5 - Nanoparticles with large external surface exposed to the movement of the plasmons and which therefore involve large amounts of plasmons per unit volume in a consistent motion on the surface of said nanoparticles.

In accordance with the foregoing, a method for obtaining the production of heavy electrons employs as nanoparticles, carbon nanohorns which have the following properties.
1- Dimensions of between 30 and 120nm.
2- Almost spherical symmetry able to receive the same electromagnetic radiation regardless of the incident direction of the same.
3- External corrugated surface with the presence of large number of protrusions, prominences/indentations with small curvature radii, such as to constitute "hot spots" for the amplification of the surface electromagnetic field;
4- Nano particles with high surface electron mobility, a typical feature of graphene type single wall nanostructures, which, when subjected to the phenomenon of Localized Surface Plasmon Resonance (LPSR), are able to greatly amplify the incident electric field on their surface.
5- Nanoparticles that have very high outer surface values per unit weight 150 to 450 m2/gram.

On the other hand, the nanoparticles (nanotubes) indicated in patent application US 2011/0255645 A1, proposed by Zawodny, do not have such optimal characteristics for the purpose of a high amplification of the surface electric field.

In fact, the nanotubes appear to be very elongated nanoparticles with diameters in the order of few nanometers, but with lengths normally higher than the micrometer.

Consider that for nanoparticles having dimensions much higher than 100nm, the movement of the conduction electrons cannot follow the oscillation of the incident electromagnetic radiation, the electrons move out of phase, resulting in a considerable widening of the absorption spectrum as well as the further displacement towards a lower frequency of the plasmon resonance.

Furthermore, the nanotubes, having the shape of tubes, according to their orientation in the dielectric medium, do not always receive the maximum incident electromagnetic radiation.

Again, the nanotubes, given their shape, have two distinct surface plasmon absorption bands, associated with the transverse and longitudinal electronic oscillations; the band with shorter wavelengths originates from the transverse oscillation mode, while that with the longer wavelength from the longitudinal oscillation; as the ratio between diameter and length of the nanotube increases we can observe a change of the wavelength and of the absorption band.

If you wish to use graphene in the form of nano graphene platelets, given the flat shape and the production size usually much greater than 100nm, for graphene nanoplates the same considerations previously made for the nanotubes apply.

Furthermore, the nano graphene platelets if irradiated with an electromagnetic radiation to its frequency of LSPR phenomena, namely in the field of frequencies that includes the near infrared, the visible and the near ultraviolet, the surface plasmons excited by the radiation propagate on the surface of the graphene nanoplates giving rise, however, to the phenomena of reflection, interference and damping at the edges and at the boundaries between the various layers of nanographene.

Said reflection phenomena, interference and damping would cause the attenuation of the coherent motion of the plasmon polaritons on the surface of the graphene nanoplates.

Another aspect to consider in the use of carbon nanohorns, relates to the amplification effect of the localized electric field on the surface of the nanoparticles for coupling arising from nanoparticles coming closer together. In fact, with the progressive coming closer of nanoparticles, especially at distances of less than a few nanometers, there occurs the further amplification of the electric field on the surfaces in the zones of the nanoparticles that are facing each other.

This additional amplification is due to an increase in induced surface charge due to opposite charges on areas facing the nanoparticles.

The localized amplification of the surface electric field is greater in the case of nanoparticles with a corrugated outer surface with the presence of protrusions, prominences/indentations, a characteristic not found in nanotubes and in graphene nanoplates, while it is typical of the nanoparticles used in this method.

The advantages set out above, then, of the method according to the invention can be shown below:
advantageously the present method, in order to produce large amounts of heavy electrons, provides for the preferable use as nanoparticles, electrically conductive, carbon nanohorns of dahlia type;
the term carbon nanohorns in the literature, in fact, indicates a family of carbon nanoparticles formed in turn by different kinds of nanoparticles; in fact, they belong to the family of carbon nanohorns the nanoparticles called "seed", "bud", "dahlia" and "petal-dahlia" carbon nanohorns;
advantageously, the dahlia type of carbon nanohorns have a size of between 30nm and 120nm;
advantageously, said dahlia type of carbon nanohorns have an almost spherical shape capable of receiving the same electromagnetic radiation regardless of the incident direction of the same;
advantageously, said dahlia carbon nanohorns have a surface conformation formed by nanocones with single-wall graphene structure with high values of electron mobility and with the presence also of protrusions, prominences/indentations, such as to constitute "hot spots" for further surface amplification of the electromagnetic field;
advantageously, the present method involves the use of a dielectric liquid that is transparent to electromagnetic radiation at the surface plasmon resonance frequency of approximately 1.15x10¹⁵ Hz;
advantageously, the present method, using known techniques, provides for the dispersion of the carbon nanohorns within the dielectric liquid that is transparent to electromagnetic radiation to form a colloid;
advantageously, therefore, the method for the production of heavy electrons considers the use of a nanofluid in which the formation of aggregation of the nanoparticles does not occur, in fact, the aggregation and the contact between the nanoparticles would significantly reduce the amplitude of the electric fields on the surface of aggregated nanoparticles in contact, compromising the formation of heavy electrons with high extra mass values;
advantageously, according to the present invention the nanofluid has a concentration varying between 20 milligrams per liter and 20 grams per liter; advantageously, according to the present invention, the method for the production of heavy electrons with high values of extra mass allows, given the values of energy per pulse, pulse duration and wavelength described in this method, the use of impulsive, coherent, monochromatic electromagnetic radiation sources, found among the laser sources produced for industrial and scientific applications;
advantageously, the device which uses the method described in the present invention, preferably employs, among the several possible, lithium salts in solution as "target materials" arranged all around the nanofluid. Said lithium salts, with high values of cross sections, have the function of absorbing the neutrons produced and give rise to a natural cycle of subsequent reactions of low energy nuclear transmutations with subsequent development of thermal energy.

Other types of materials can be used as target materials.

### Brief Description of the Drawings

Fig.1 represents in simple and schematic way the physical phenomenon of Localized Surface Plasmon Resonance (Localized Surface Plasmon Resonance - LSPR).
Fig.2 schematically represents the device according to the present invention, for the production of heavy electrons able to triggering and sustaining a low energy nuclear reaction.
Fig.3 is an SEM image of a set of dahlia-type carbon nanohorns.
Fig. 4 is a TEM image of a set of dahlia-type carbon nanohorns.
Fig.5 is a TEM image of dahlia-type carbon nanohorns.
Fig.6 shows two nanofluid flasks containing deionized water and dahlia-type carbon nanohorns with different concentrations.
Fig. 7 shows the spectrum of transmittance of a nanofluid consisting of deionized water and dahlia-type carbon nanohorns for different concentrations of dahlia-type carbon nanohorns.

### Detailed description

The present invention is a method for the production of heavy electrons with high values of extra mass where the relative production of these heavy electrons is used in applications that concern the generation of neutrons that possibly can be used to trigger and sustain a low energy nuclear reaction.

Below is a general description of a non-limiting example of a preferred embodiment of the present invention.

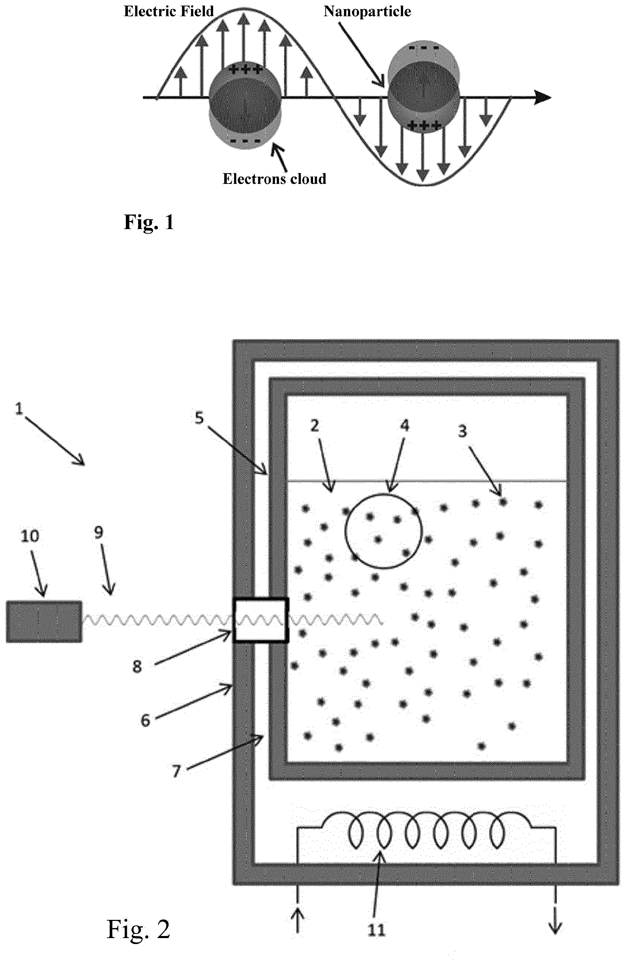

A physical system based on Localized Surface Plasmon Resonance phenomenon (Local Surface Plasmon Resonance - LSPR) is shown in a simplified and schematic way in Fig. 1.

Referring to Fig. 1, the LSPR physical system has the following essential elements, the electrically conductive nanoparticles immersed in a dielectric medium, not shown, and an incident electromagnetic radiation on the electrically conductive nanoparticles.

The present invention is based on the physical phenomenon of LSPR of which it presents the revised and reconsidered characteristic elements in order to achieve the purpose of the present invention.

Referring to the drawings, and more particularly to Fig. 2, a device 1 is shown schematically for producing heavy electrons in accordance with the present invention.

To achieve the purpose of the present invention, a dielectric liquid 2, transparent to electromagnetic radiation and which has hydrogen ions and/or hydroxonium dispersed inside, is employed; in particular preferably deionized water is used.

Inside said liquid dielectric 2 electrically conductive nanoparticles are uniformly dispersed.

The nanoparticles used are carbon 3 nanohorns.

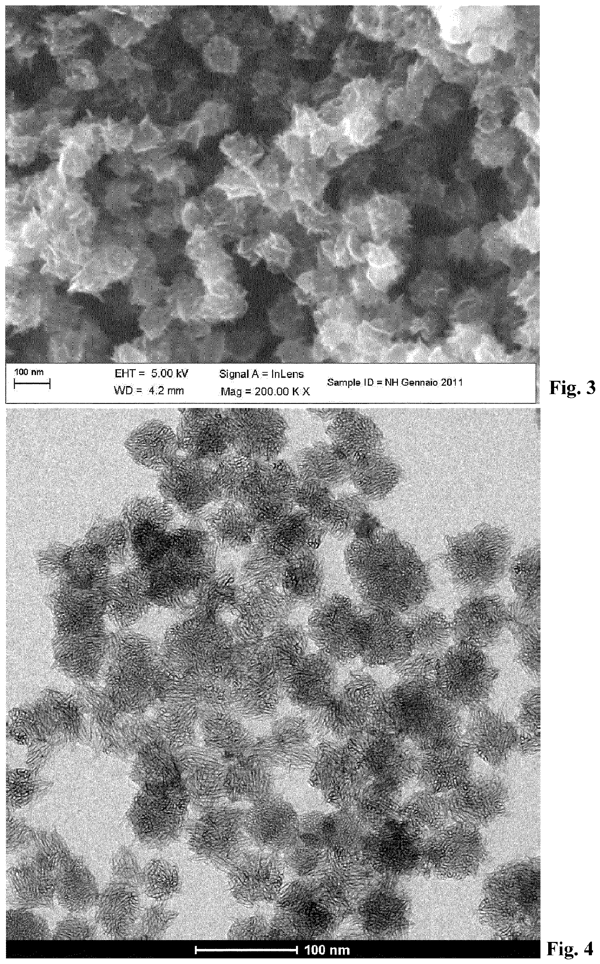

Of the four types of carbon 3 nanohorns indicated previously, advantageously in the present detailed example of the method, dahlia-type carbon 3 nanohorns are employed for the production of heavy electrons with a size of between 30 and 120nm. Said dahlia-type carbon 3 nanohorns are shown in figures 3, 4, 5.

Said dahlia-type carbon 3 nanohorns were dispersed in a uniform manner in the dielectric liquid 2 consisting of deionized water with a concentration of 500mg/l according to the following procedure.

The dahlia-type carbon 3 nanohorns were mechanically dispersed in a solution composed of the dielectric liquid 2 consisting of deionized water. A first dispersion of the dahlia-type carbon 3 nanohorns was carried out in the dielectric liquid transparent to electromagnetic radiation 2 using a sonicator, then a second dispersion was carried out employing a high pressure homogenizer to optimize the final dispersion. With this procedure the long-term stability of the dispersion is ensured.

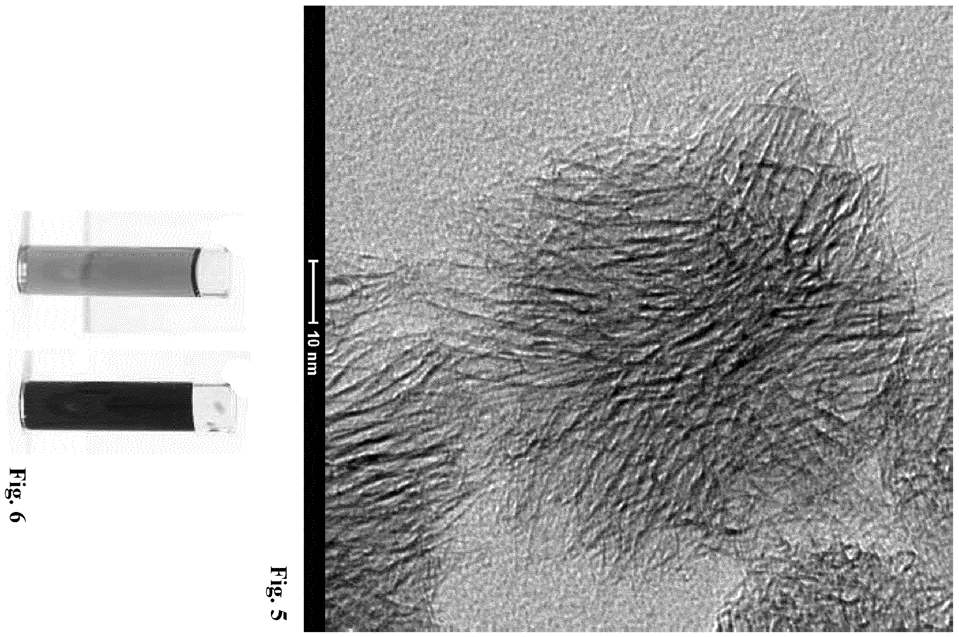

As a result of these uniform dispersion operations a nanofluid 4 was obtained. Fig.6 shows two examples of flasks of nanofluid 4 consisting of deionized water and dahlia-type carbon 3 nanohorns with two different concentrations. To determine the natural frequency of the surface plasmon resonance of the nanofluid 4 at different concentrations, the spectrum of transmittance was carried out at room temperature for several samples of nanofluid 4.

It was verified that with a concentration of 500 mg/l the natural frequency of plasmon resonance of the nanofluid 4 does not change and remains in the neighborhood of 1.15x10¹⁵ Hz, equal to a wavelength of about 260nm.

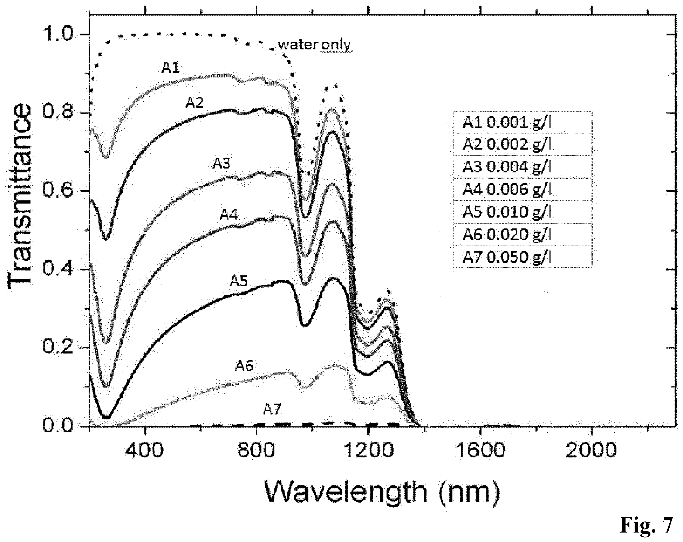

As is clear from the spectrum of light transmission of fig. 7, for the wavelength of about 260nm (near ultraviolet), we find the minimum transmittance of the incident electromagnetic radiation in the nanofluid 4. Therefore, at the frequency of about 260 nm the maximum absorption of incident electromagnetic energy on the nanofluid 4 occurs.

With 500 grams of said nanofluid 4, having a concentration of dahlia-type carbon 3 nanohorns equal to 500mg/l, an insulated container 5 was filled. The insulated container 5 was placed inside another insulated container 6.

In the interspace 7, defined between the two said insulated containers, a solution of Lithium Chloride was introduced dispersed in water with a concentration equal to 800grams/liter, said solution is not shown in Fig. 2, said solution of Lithium Chloride dispersed in water an almost saturated concentration equal to 800grams/liter had a weight of about 900 grams (500 grams of water and about 400 grams of Lithium Chloride).

Once introduced in the interspace 7, the Lithium Chloride solution dispersed in water with a weight of 900 grams, a time sufficient was waited to allow said solution to go into thermal equilibrium with the room temperature. In the device there had been previously made a duct with a window transparent to electromagnetic radiation 8.

Through said duct with the window transparent to electromagnetic radiation 8, pulses of a beam of electromagnetic radiation 9 were made to impact in the nanofluid 4, inside the metal container 5, having a diameter of about 0.3mm, generated by a laser-type electromagnetic radiation source 10 with a wavelength of 266nm.

Said laser-type electromagnetic radiation 9 at a frequency of 266nm had a duration of about 2ns, a repetition frequency of about 1Hz, an irradiance of about 5x10¹¹ W/cm2.

The 500 grams of nanofluid 4, initially at 21° C room temperature, enclosed in the insulated container 5, were irradiated by the beam of electromagnetic radiation 9, a laser type, having a diameter of 0.3mm, and a frequency of 266nm, with a pulse of duration of about 2ns, a repetition frequency of about 1 Hz and with a pulse energy equal to approximately 0.35J having an irradiance of about 5x10¹¹W/cm² for approximately 3600 seconds.

During this period of time of 3600 seconds, the metal coil for the heat exchange 11 was empty without any circulation of cooling water.

At the end of the period of 3600 seconds there was a measurement of the temperature of the Lithium Chloride solution dispersed in water with a concentration of 800 grams/liter contained in the interspace 7 and having a weight of about 900 grams.

Said temperature was 33° C; therefore a temperature rise of 12° C above room temperature.

Whereas the energy transferred in 3600 seconds from the electromagnetic radiation beam 9, laser type with the characteristics indicated above, was about 1260 J, a net amount of thermal energy was produced that was about 23 times the energy supplied through the beam of electromagnetic radiation 9, collimated and of the laser variety.

The device 1 allows for the recovery of the net thermal energy produced using the circulation of water in the heat exchange coil 11.

## Claims

1. Method for the production of heavy electrons comprising at least a first step of making a nanofluid (4) by dispersing, through sonication, or else other mechanical dispersion methods in a dielectric liquid (2) transparent to electromagnetic radiation (9), and which has dispersed inside it hydrogen ions and/or hydroxonium ions, electrical conductive nanoparticles wherein said nonparticles belong to the type defined as nanohorns;
and wherein the method comprises at least a second irradiation step of said nanofluid (4) with a source of electromagnetic radiation (10), at the natural surface plasmonic resonance frequency of said nanofluid (4).

2. Method for the production of heavy electrons according to claim 1, **characterized by** the fact that said nanohorns are carbon nanohorns (3).

3. Method for the production of heavy electrons according to claim 1 or 2, **characterized by** the fact that said nanohorns are of the dahlia variety.

4. Method for the production of heavy electrons according to one of claims 1 to 3, **characterized by** the fact that said nanohorns have a size between 30 and 120nm.

5. Method for the production of heavy electrons according to one of claims 1 to 3, **characterized by** the fact that said nanohorns possess values of the outer surface per unit of weight of around 140-450 m²/gram.

6. Method for the production of heavy electrons according to claim 1, **characterized by** the fact that said dielectric liquid (2) transparent to electromagnetic radiation (9) is composed of water.

7. Method for the production of heavy electrons according to claim 1, **characterized by** the fact that said dielectric liquid (2) transparent to electromagnetic radiation (9) is made from demineralised water or deionized water or distilled water or heavy water or a mixture of said types of water.

8. Method for the production of heavy electrons according to claim 1, **characterized by** the fact that the concentration of said nanohorns in said dielectric liquid (2) transparent to electromagnetic radiation (9) is between 20 milligrams and 20 grams per litre.

9. Method for the production of heavy electrons according to claim 1, **characterized by** the fact that said source of electromagnetic radiation (10) irradiates said nanofluid (4) with a beam of electromagnetic radiation (9) pulsed, coherent, monochromatic at the natural frequency of the surface plasmon resonance of said nanofluid (4).

10. Method for the production of heavy electrons according to claim 9, **characterized by** the fact that the pulses of said beam of impulsive electromagnetic radiation (9) have a duration of between 100 nanoseconds and 10 picoseconds with a repetition frequency of the pulses between 1Hz and 10000Hz.

11. Method for the production of heavy electrons according to claim 1 or 9, **characterized by** the fact that said beam of electromagnetic radiation has an irradiance between 10¹⁰ and 10¹³W/cm².

12. Method for the production of heavy electrons according to claim 1 or 9 **characterized by** the fact that said beam of electromagnetic radiation (9) must have a frequency around 1.15x10¹⁵ Hz, with a dielectric liquid as in claim 6 or 7.

## Patentansprüche

1. Verfahren zur Herstellung von schweren Elektronen, umfassend mindestens einen ersten Schritt des Herstellens eines Nanofluids (4) durch Dispergieren, durch Beschallung oder auch andere mechanische Dispersionsverfahren in einer für elektromagnetische Strahlung (9) transparenten dielektrischen Flüssigkeit (2), und die in ihr Wasserstoffionen und/oder Hydroniumionen, sowie elektrisch leitfähige Nanopartikel dispergiert hat, wobei die Nichtpartikel zu dem als Nanohorn definierten Typ gehören;
und wobei das Verfahren mindestens einen zweiten Bestrahlungsschritt des Nanofluids (4) mit einer Quelle elektromagnetischer Strahlung (10) auf der natürlichen Oberflächen-Plasmonresonanzfrequenz des Nanofluids (4) umfasst.

2. Verfahren zur Herstellung von schweren Elektronen nach Anspruch 1, **dadurch gekennzeichnet, dass** die Nanohorns Kohlenstoff-Nanohoms (3) sind.

3. Verfahren zur Herstellung von schweren Elektronen nach Anspruch 1 oder 2, **dadurch gekennzeichnet, dass** die Nanohorns der Dahlia-Art angehören.

4. Verfahren zur Herstellung von schweren Elektronen nach einem der Ansprüche 1 bis 3, **dadurch gekennzeichnet, dass** die Nanohorns eine Größe zwischen 30 und 120 nm aufweisen.

5. Verfahren zur Herstellung von schweren Elektronen nach einem der Ansprüche 1 bis 3, **dadurch gekennzeichnet, dass** die Nanohorns Werte der Außenfläche pro Gewichtseinheit von etwa 140-450 m2/Gramm aufweisen.

6. Verfahren zur Herstellung von schweren Elektronen nach Anspruch 1, **dadurch gekennzeichnet, dass** die für elektromagnetische Strahlung (9) transparente dielektrische Flüssigkeit (2) aus Wasser besteht.

7. Verfahren zur Herstellung von schweren Elektronen nach Anspruch 1, **dadurch gekennzeichnet, dass** die für elektromagnetische Strahlung (9) transparente dielektrische Flüssigkeit (2) aus demineralisiertem Wasser oder deionisiertem Wasser oder destilliertem Wasser oder schwerem Wasser oder einer Mischung aus diesen Wassertypen gebildete wurde.

8. Verfahren zur Herstellung von schweren Elektronen nach Anspruch 1, **dadurch gekennzeichnet, dass** die Konzentration der Nanohorns in der für elektromagnetische Strahlung (9) transparenten dielektrischen Flüssigkeit (2) zwischen 20 Milligramm und 20 Gramm pro Liter liegt.

9. Verfahren zur Herstellung von schweren Elektronen nach Anspruch 1, **dadurch gekennzeichnet, dass** die Quelle der elektromagnetischen Strahlung (10) das Nanofluid (4) mit einem Strahlungsbündel elektromagnetischer Strahlung (9) gepulst, kohärent, monochromatisch und mit der Eigenfrequenz der Oberflächenplasmonresonanz des Nanofluids (4), bestrahlt.

10. Verfahren zur Herstellung von schweren Elektronen nach Anspruch 9, **dadurch gekennzeichnet, dass** die Impulse des Strahlungsbündels der impulsiven elektromagnetischen Strahlung (9) eine Dauer zwischen 100 Nanosekunden und 10 Pikosekunden mit einer Wiederholfrequenz der Impulse zwischen 1 Hz und 10000 Hz aufweisen.

11. Verfahren zur Herstellung von schweren Elektronen nach Anspruch 1 oder 9, **dadurch gekennzeichnet, dass** der Strahlungsbündel elektromagnetischer Strahlung eine Bestrahlungsstärke zwischen 10¹⁰ und 10¹³ W/cm2 aufweist.

12. Verfahren zur Herstellung von schweren Elektronen nach Anspruch 1 oder 9, **dadurch gekennzeichnet, dass** der Strahlungsbündel elektromagnetischer Strahlung (9) eine Frequenz von etwa 1,15x10¹⁵ Hz mit einer dielektrischen Flüssigkeit nach Anspruch 6 oder 7 aufweisen muss.

## Revendications

1. Méthode pour la production d'électrons lourds comprenant au moins une première phase de réalisation d'un nano fluide (4) dispersant, à travers sonication ou bien à travers d'autres méthodes de dispersion mécanique dans un liquide diélectrique (2) transparent à la radiation électromagnétique (9), et qui présente dispersés à son intérieur des ions d'hydrogène et/ou d'hydroxonium, des nanoparticules électriquement conductrices dans lesquelles lesdites nanoparticules appartiennent à la typologie définie comme nano cornets ; et dans laquelle la méthode comprend au moins une seconde phase d'irradiation dudit nano fluide (4) avec une source de radiation électromagnétique (10), à la fréquence naturelle de résonance plasmonique superficielle dudit nano fluide (4)

2. Méthode pour la production d'électrons lourds selon la revendication 1, **caractérisée par le fait que** lesdits nano cornets sont nano cornets de carbone (3).

3. Méthode pour la production d'électrons lourds selon la revendication 1 ou 2, **caractérisée par le fait que** lesdits nano cornets sont de type dahlia.

4. Méthode pour la production d'électrons lourds selon une des revendications de 1 à 3 ci-dessus, **caractérisée par le fait que** lesdits nano cornets ont des dimensions comprises entre 30 et 120 nm.

5. Méthode pour la production d'électrons lourds selon une des revendications de 1 à 3, **caractérisée par le fait que** lesdits nano cornets possèdent des valeurs de surface externe par unité de poids autour de 140÷450 m2/gramme.

6. Méthode pour la production d'électrons lourds selon la revendication 1, **caractérisée par le fait que** ledit liquide (2) diélectrique transparent à la radiation électromagnétique (9) est constitué d'eau.

7. Méthode pour la production d'électrons lourds selon la revendication 1, **caractérisée par le fait que** ledit liquide diélectrique (2) transparent à la radiation électromagnétique (9) est constitué d'eau déminéralisée ou d'eau déionisée ou d'eau distillée ou d'eau lourde ou d'un mélange desdits types d'eau.

8. Méthode pour la production d'électrons lourds selon la revendication 1, **caractérisée par le fait que** la concentration desdits nano cornets dans ledit liquide diélectrique (2) transparent à la radiation électromagnétique (9) est comprise entre 20 milligrammes et 20 grammes par litre.

9. Méthode pour la production d'électrons lourds selon la revendication 1, **caractérisée par le fait que** ladite source de radiation électromagnétique (10) irradie ledit nano fluide (4) avec un faisceau de radiation électromagnétique (9) impulsive, cohérente, monochromatique, à la fréquence naturelle de résonance plasmonique superficielle dudit nano fluide (4).

10. Méthode pour la production d'électrons lourds selon la revendication 9, **caractérisée par le fait que** les impulses dudit faisceau de radiation électromagnétique (9) de type impulsif présentent une durée comprise entre 100 nanosecondes et 10 picosecondes avec une fréquence de répétition des impulses comprise entre 1Hz et 1000Hz.

11. Méthode pour la production d'électrons lourds selon la revendication 1 ou 9, **caractérisée par le fait que** ledit faisceau de radiation électromagnétique (9) présente une irradiation comprise entre 10¹⁰ et 10¹³W/cm2.

12. Méthode pour la production d'électrons lourds selon la revendication 1 ou 9, **caractérisée par le fait que** ledit faisceau de radiation électromagnétique (9) doit présenter une fréquence d'environ 1.15x10¹⁵Hz, avec un liquide diélectrique comme dans les revendications 6 ou 7.
